# EUROPEAN PATENT SPECIFICATION

(11) **EP 3 295 786 B1**
(45) Date of publication and mention of the grant of the patent: **27.10.2021**
(21) Application number: 16189079.3
(22) Date of filing: 15.09.2016
(51) Int. Cl.: A01D 82/02, A01D 43/10, B02C 4/10, B02C 4/30

(54) **CROP PROCESSING ROLL FOR A FORAGE HARVESTER**
GETREIDEVERARBEITUNGSROLLE FÜR FELDHÄCKSLER
ROULEAU DE TRAITEMENT DE PLANTES CULTIVÉES POUR UNE RÉCOLTEUSE-HACHEUSE

(43) Date of publication of application: 21.03.2018
(73) Proprietor: Horning Manufacturing, LLC, East Earl, PA 17519 (US)
(72) Inventor: Horning, Matthew H., Pembroke, KY 42266 (US); Horning, Leon Z., East Earl, PA 17519 (US); Horning, Leon H. Jr., Ephrata, PA 17522 (US)
(74) Representative: Harrison IP Limited

(56) References cited:
- EP-A1- 1 516 523
- US-A1- 2002 074 438
- US-A1- 2005 097 874
- US-A1- 2013 092 774
- US-B1- 6 360 515
- US-B1- 8 480 019

## Description

### FIELD OF THE INVENTION

This invention deals generally with forage harvesters, and more specifically with a processing roll that yields higher flow-through capacity than is currently available in the corn kernel cracking section of a forage harvester.

### BACKGROUND OF THE INVENTION

Forage harvesters are mobile machines designed to chop whole corn plants into small pieces to be fed to cattle and other livestock. Conventional forage harvesters are manufactured with a cutterhead formed with helical knives and rotate about a horizontal axis to chop forage material, such as corn or alfalfa, into small pieces that are typically fermented through a process referred to as ensilage. The forage harvester first severs the plants from the ground and conveys the severed plants into the path of the rotating cutterhead. By manipulating the speed at which the crop material is conveyed and the speed at which the cutterhead is rotated, the length of the small pieces of crop material can be varied as desired by the operator.

Forage harvesters can also utilize a pair of counter rotating processing rolls which rotate about parallel axes and define a gap therebetween. The crop material can pass through this gap after being chopped into small pieces by the rotating cutterhead to crack the kernels of corn that may be in the flow of crop material exiting the cutterhead. By cracking the corn kernels, livestock, particularly dairy cattle, have improved digestibility, and produced more and higher quality milk. The crop material discharged from between the corn processing rolls is fed into a blower that moves the chopped crop material through a discharge chute to be deposited into a container, such as a forage wagon that is typically connected to the forage harvester and trails behind the harvester to receive the chopped crop material. Once filled, the forage wagon is disconnected and taken to a storage facility where the forage wagon is emptied and returned to the forage harvester for refilling.

Conventional corn processing rolls are constructed with longitudinally extending grooves machined into the rolls, which are then reduced to individual teeth by a continuous helical groove that is machined around the circumference of the roll to form peaks and valleys along the longitudinal, axial length of the outer circumferential surface of the corn processing rolls. In cross-section, these peaks and valleys can resemble saw teeth.

Due to the high cost of forage harvesters and limited harvesting time when the crop is ready to be harvested, harvesting speed is very critical to a successful operation of the forage harvester. One of the known limitations on the harvesting speed in forage harvester configurations that utilize corn processing rolls is the operating speed of the corn processing rolls. With increasing harvesting speeds being demanded of the operation of forage harvesters, the corn processing rolls require advance design to prevent the corn processing rolls from being a bottleneck in the operation of a forage harvester.

Known prior art machines have attempted to overcome this limitation by running the corn processing rolls at higher speeds, but have had limited success because of centrifugal force limits on the rolls and speed limitations on the bearings rotatably supporting the corn processing rolls. Another known prior art approach to increasing operating speeds has been to space the peaks on the roll surfaces farther apart, but this technique results in some kernels passing between the corn processing rolls without being cracked.

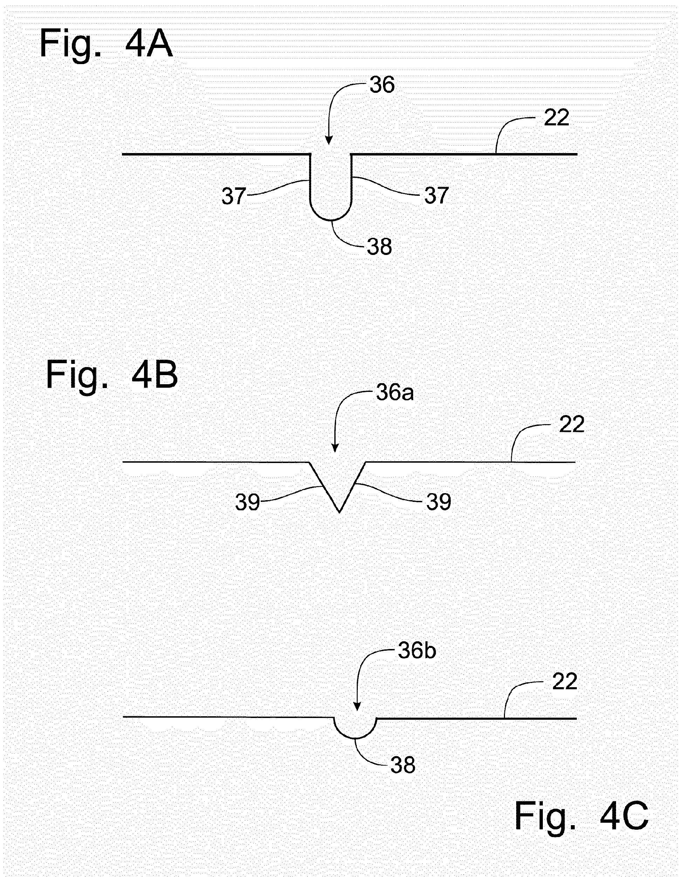

A representative example of the design of corn processing rolls for use in a forage harvester is disclosed in U. S. Patent No. 8,480,019, granted on July 9, 2013, to Bob A. Scherer, et al, in which the corn processing roll is formed with a series of longitudinally spaced grooves that define elongated axially aligned ridges between the longitudinal grooves. The corn processing roll then goes through a subsequent manufacturing process to form a helical groove extending circumferentially around the corn processing roll, as is best seen in Fig. 4. The longitudinal and helical grooves disclosed in the '019 patent are formed with a v-shaped bit that creates corresponding V-shaped grooves, resulting in discrete teeth around the circumference of the corn processing roll that have a larger base than the top portion of the respective tooth, as is best seen in Fig. 5 of the '019 patent.

Corn processing rolls have been manufactured by Horning Manufacturing, LLC, for many years in a variety of configurations, including corn processing rolls with longitudinal and helical grooves similar to that of the '019 patent, but formed with a rounded bit that creates vertical sides of the respective teeth around the circumference of the corn processing rolls. Certain configurations of the Homing Manufacturing, LLC, corn processing rolls have also been operated at differential speeds of rotation to provide a more aggressive shredding of the crop material being chopped by the forage harvester.

These corn processing rolls, such as is represented in the '019 patent, formed with a helical groove around the circumference, irrespective of the shape of the grooves, have a tendency to urge the movement of the crop material passing between the crop processing rolls toward the end of the corn processing rolls that faces the leading slope of the helical groove. In other words, the helical flighting of the circumferential groove pushes crop material toward the leading end of the rolls. While the leading slope of the circumferential helical groove is not very aggressive, there has been sufficient movement of the crop material toward the leading end to cause more failures for the bearings supporting the rotation of the corn processing rolls at the leading end than occur at the trailing end.

It would be desirable to provide a configuration of corn processing rolls for use in forage harvesters that would facilitate the high-speed harvesting operation of forage harvesters without sacrificing quality of operation. It would also be desirable to provide a configuration for corn processing rolls that would not over stress the bearings on one end of the corn processing roll as compared with the opposing end of the corn processing roll.

### SUMMARY OF THE INVENTION

In accordance with a first aspect of the invention, there is provided a crop processing roll as hereinafter set forth in Claim 1 of the appended claim.

By "generally lengthways" it is meant that the first grooves may extend either parallel to the axis of rotation or be slightly inclined relative to it, so as to form a helix with a helical angle in the range of 0° to 30°, or 0° to 20°, or 0° to 10° or 0° to 5°.

The term "helical angle" is used herein to refer to the angle between a groove and a line on the surface of the cylinder extending parallel to the axis of the cylindrical body.

If the lengthways grooves are helical, in order for the second grooves to intersect the first grooves and define teeth, it is necessary for the helical angle of the second grooves to exceed that of the first grooves.

In the invention, the second set of grooves comprise grooves at the opposite axial ends of the roll that are oppositely oriented, that is to say the helical angle of the second set of grooves changes from a positive value to a negative value at the intermediate plane of the cylindrical body, to cause the crop to migrate away from both axial ends of the cylindrical body towards the latter plane.

In accordance with a second aspect of the invention, the invention provides a crop processor as hereinafter set forth in Claim 7 of the appended claims.

In some embodiments of the invention, the processor rolls may meet at the intermediate plane and form a chevron groove pattern.

An advantage offered by embodiments of the invention is that the bearings for the crop processing rolls may have a longer operating life.

A further advantage of embodiments of the invention is that the opposing bearings rotatably supporting the crop processing rolls may have substantially equal operating lives without one bearing prematurely failing relative to the opposing bearing.

It is still another advantage of embodiments of this invention that the crop processing rolls can provide effective operation without requiring the operating speed of rotation of the crop processing rolls to be increased.

### BRIEF DESCRIPTION OF THE DRAWINGS

The foregoing and other objects, features, and advantages of the invention will appear more fully hereinafter from a consideration of the detailed description that follows, in conjunction with the accompanying sheets of drawings. It is to be expressly understood, however, that the drawings are for illustrative purposes and are not to be construed as defining the limits of the invention.

In the drawings:
Fig. 1 is a schematic partial cross-sectional view of a conventional forage harvester having a corn processing unit installed between the cutterhead and the blower;
Fig. 2A is an elevational view of an embodiment of a corn processing roll of the present invention;
Fig. 2B is an elevational view of a second embodiment of a corn processing roll of the present invention;
Fig. 3 is an enlarged perspective view of a central portion of the processing roll incorporating the configuration of the embodiment of the invention shown in Fig. 2A;
Fig. 3A is an enlarged perspective view of a central portion of the processing roll incorporating the configuration of the an embodiment of the invention as shown in Fig. 2B;
Fig. 4A is a schematic view of a first groove profile embodiment;
Fig. 4B is a schematic view of a second groove profile embodiment; and
Fig. 4C is a schematic view of a third groove profile embodiment.

### DETAILED DESCRIPTION OF THE PREFERRED EMBODIMENT

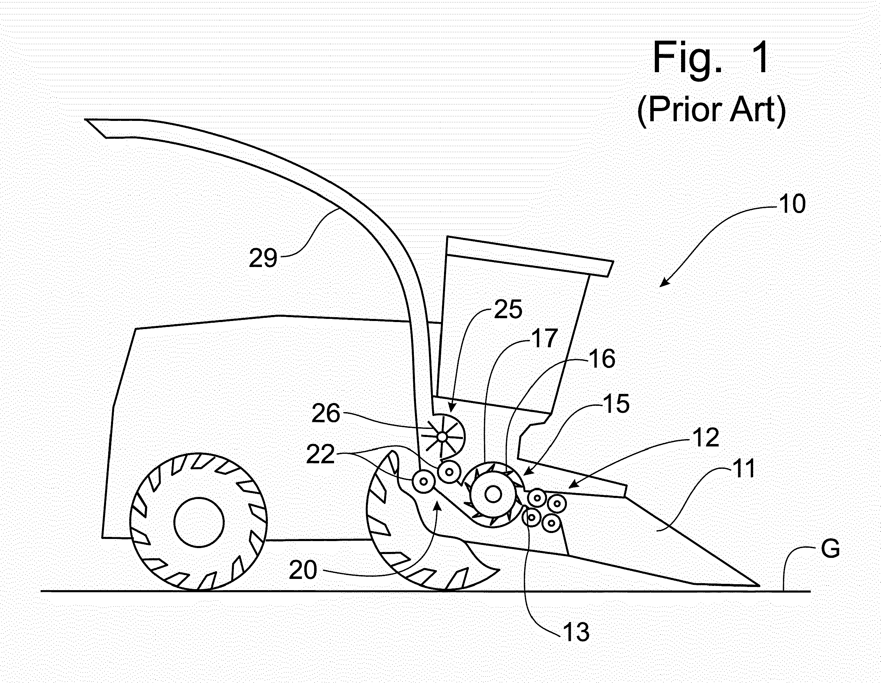

Referring to the drawings, corn processing rolls incorporating the principles of the present invention can best be seen. A conventional forage harvester 10, as depicted schematically in Fig. 1, includes a header 11 at the forward end thereof to collect crop material from the surface of the ground G, typically by severing the crop adjacent to the ground G and conveying the severed crop material rearwardly for further harvesting. The severed crop material is typically delivered to a feed roll mechanism 12 that orients the crop material as a flat mat that is advanced toward a rotating cutterhead 15 having knives 16 mounted thereon to sever the crop material into small pieces as the mat of crop material passes over a shear bar 13. The rapidly rotating cutterhead 15 rotating within a housing 17 propels the severed crop material pieces to the corn processing roll assembly 20 having a pair of corn processing rolls 22 separated by a gap through which the propelled comminuted crop material pieces pass.

One of the corn processing rolls 22 is normally biased toward the opposing corn processing roll 22 by springs (not shown) that keep the spacing minimized to provide the operation of cracking the kernels of corn within the pieces of crop material passing through the corn processing roll assembly 20. Furthermore, the respective rolls 22 are normally driven at differential speeds to shred the crop material passing between the two rolls 22. The rotating corn processing roll assembly 20 in turn propels the processed pieces of crop material upwardly into a blower 25 having vanes 26 that project the chopped and processed crop material through a discharge chute 29 into a trailing forage wagon (not shown) that collects the discharged crop material for transport to a storage facility (not shown).

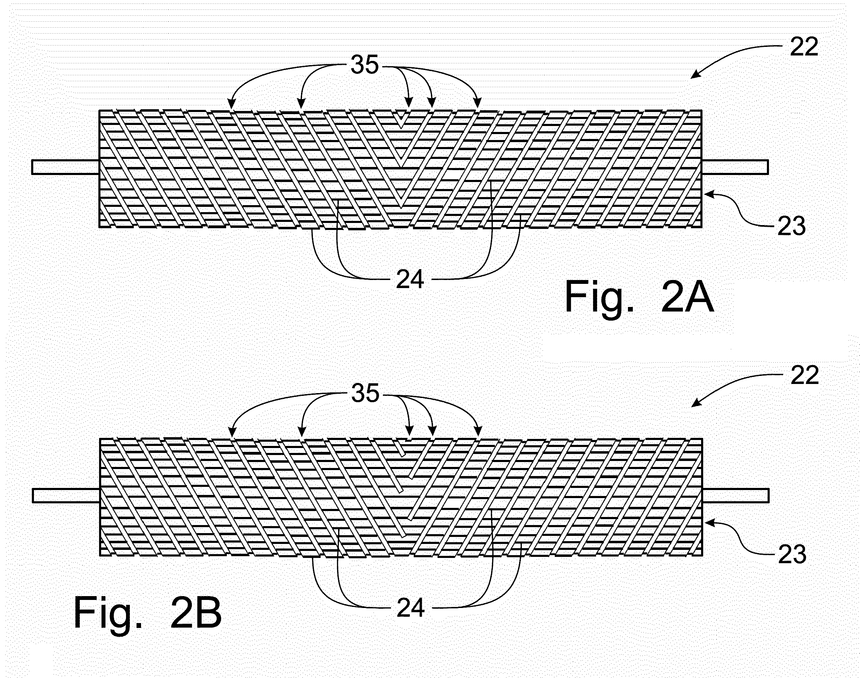

The present invention increases the quantity of chopped corn plants, particularly with respect to the corn kernels found in the supply of chopped corn plants, that the corn processing rolls provide without requiring the speed of rotation of the corn processing rolls be increased. This increase in productivity is accomplished by placing multiple notches along the length of the longitudinally oriented peaks formed along the axial length of the outer surface of the corn processing rolls 22. Furthermore, by use of the instant invention, the preferred spacing between the longitudinal peaks can be maintained and multiple longitudinal teeth are created by the placement of the circumferential grooves around the corn processing rolls to intersect the longitudinal peaks, as is best seen in Figs. 2A and 2B. Since the overall diameter of the corn processing rolls are not increased, and since the corn processing rolls can be operated at the conventional speed of the previous corn processing rolls, the rolls 22 formed according to the instant invention can be retrofitted into existing machines to increase the capacity thereof by merely replacing the previous corn processing rolls with rolls manufactured according to the embodiments of the invention.

Two configurations of corn processing roll 22 according to the present invention are depicted in Figs. 2A and 2B. The intent of these corn processing rolls 22 is to provide increased capacity rolls 22 without utilizing a groove pattern that will shift crop material toward one axial end of the crop processing roll as crop material is passed between the rotating corn processing rolls 22.

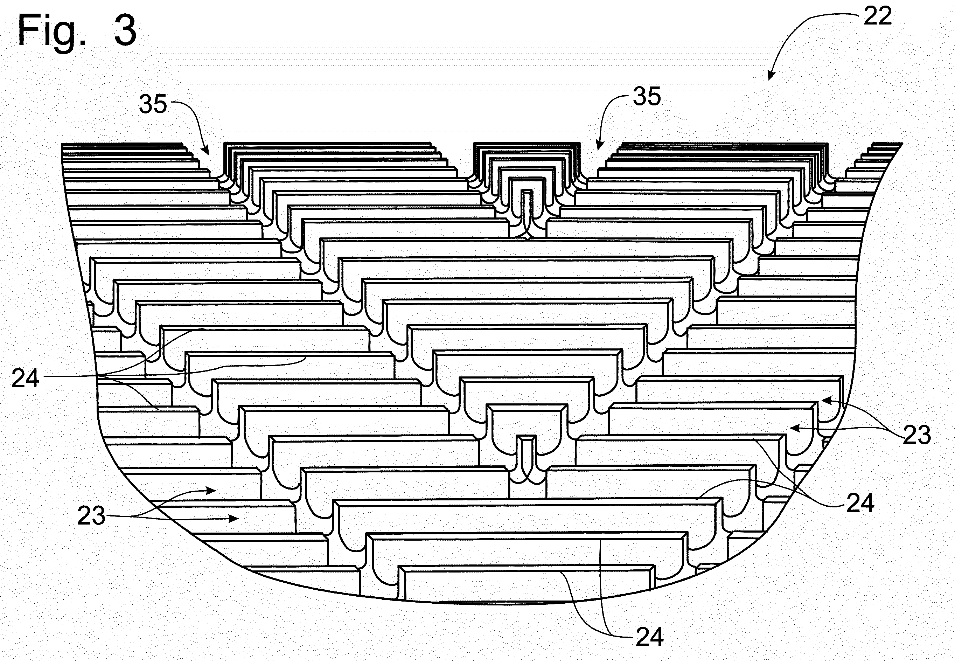

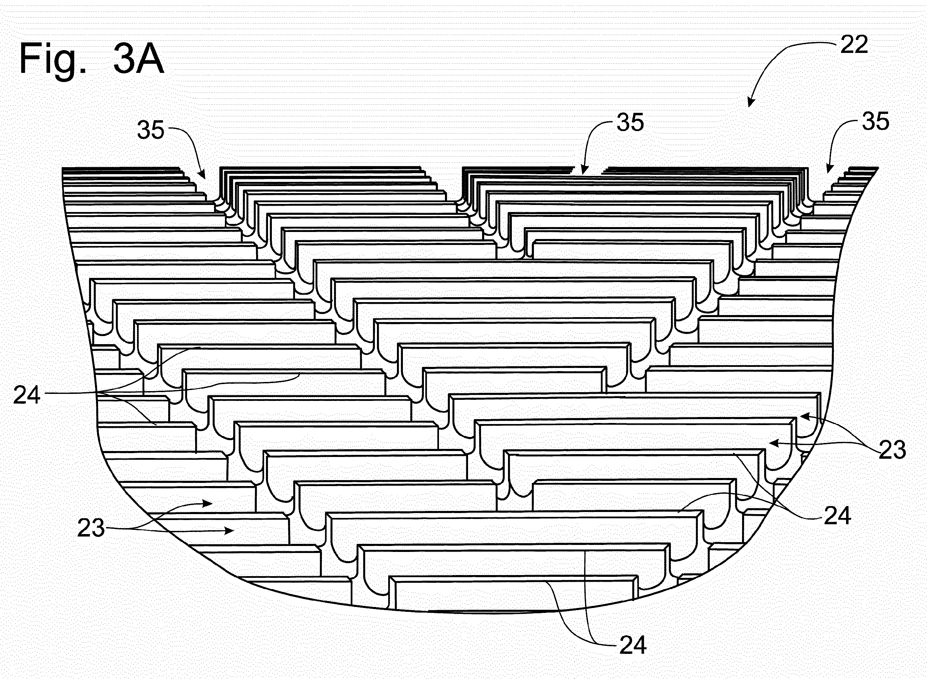

The processing roll 22 incorporating the configuration of a first embodiment depicted in Fig. 2A and in the enlarged portion of the corresponding processing roll 22 shown in Fig. 3, is also formed with the longitudinally extending grooves 23 running parallel with the axis of rotation of the processing roll 22, but is intersected with a helical circumferential groove 35 formed in the shape of a chevron. The circumferential groove 35 coils in opposing directions from the opposing ends of the processing roll 22, meeting at the center in a V-shape, thus forming the chevron configuration. As opposed to a continuous helical circumferential groove extending from one end of the processing roll 22 to the other, as is known in the prior art, which causes the crop material being processed between the processing rolls to move toward one end of the processing roll 22, the chevron design will urge movement of the crop material being processed away from the opposing ends of the processing roll 22 and toward the center of the roll 22. Accordingly, with the chevron groove 35 configuration, as with the parallel circumferential groove 32 configuration, the bearings at one end of the processing roll 22 is not consistently overloaded.

The configuration of the second embodiment of the invention as shown in Fig. 2B and in the enlarged portion of the corresponding processing roll shown in Fig. 3A, is similar to the first embodiment noted above, but leaves a gap between the oppositely slanted helical grooves 35. This semi-chevron configuration of helical grooves 35 does not create and leave a short tooth formed from the ridge 24 at the intersection of the oppositely oriented helical grooves 35. In other words, the "V" of the chevron grooves 35 in the embodiment depicted in Fig. 2A will leave a short portion of the ridge 24 at the point of the "V". By stopping the helical grooves 35 prior to actually intersecting the oppositely winding helical groove 35, only longer teeth are created from the ridges 24, as compared to the length of the ridge segments 24 between parallel helical grooves 35, rather than forming shorter ridge segments (teeth).

Further, one skilled in the art will recognize that the chevron shape of the helical extending grooves 35 as shown in either Fig. 2A or Fig. 2B, will either urge crop toward the center of the processing roll 22, or outwardly toward both opposing ends of the processing roll 22, depending on which direction the processing roll 22 is rotated. In either direction of rotation, i.e. whether the crop material is urged toward the center of the roll 22 or toward the opposing ends of the roll 22, the opposing bearings supporting the processing roll 22 for rotation about the axis of rotation will be equally loaded and will not result in a premature failure of one of the bearings over the other.

Figs. 4A - 4C are schematic diagrams of several alternate embodiments of shapes for grooves forming the ridges of kernel processing rolls 22 of the invention. Fig. 4A depicts the preferred embodiment of the shape of the grooves 23, 32, 35 created by the machining of the processing rolls 22, formed with a bit that has parallel sides and a rounded tip, resulting in a groove 36 having generally vertical, parallel sides 37 joined by concave bottom 38 portion. Fig. 4B shows a second embodiment of the grooves 23, 32, 35 formed by a V-shaped bit resulting in sloping sides 39 that form a corresponding V-shape in the groove 36a. The third embodiment shown in Fig. 4C shows a groove 36b having a shape similar to that of Fig. 4A, but with only the rounded tip of the bit being engaged with the processing roll 22 to form just the concave bottom portion 38.

One skilled in the art will understand that many other groove shapes can be utilized in forming both the longitudinally extending grooves 23 and the helical grooves 35, so long as the shape of the grooves, the spacing of the grooves and the configuration of the groove pattern does not result in corn kernels passing through the processing rolls 22 without being cracked. Accordingly, the configuration of the grooves 23, 35 must meet the basic requirement that the groove size and shape must be such that the grooves prevent corn kernels from being lodged within the groove, and not allow corn kernels from passing between the processing rolls 22 without being cracked.

While the longitudinally extending grooves 23 have been described as being parallel to the rotational axis of the cylinder, it may be possible in alternative embodiments of the invention for them to extend helically with a smaller helical angle than the circumferentially extending grooves. The helical angle may be small, for example less than 30°, or less than 20° or less than 10°, or less than 5°. The inclination of the teeth will in this case drive the crop towards one end of the processing roll, and the helical angle of these grooves should therefore be reversed at the opposite ends of the roll for the crop to migrate away from both axial ends of the processing roll.

It will be understood that changes in the details, materials, steps and arrangements of parts which have been described and illustrated to explain the nature of the invention will occur to and may be made by those skilled in the art upon a reading of this disclosure within the principles and scope of the invention. The scope of the invention is limited as set forth in the appended claims.

## Claims

1. A crop processing roll (22) for use in a forage harvester (10) to crack corn kernels in crop material comminuted by the operation of the forage harvester (10) before being discharged from the forage harvester (10), comprising:
an elongate cylindrical body adapted for rotation about an axis, with the cylindrical outer surface having formed therein a set of first grooves (23) extending generally lengthways of the cylindrical body, said first grooves (23) forming ridges (24) therebetween,
and a set of second grooves (35) formed in the cylindrical outer surface and extending in a direction to intersect said first grooves (23) and pass through said ridges (24), thereby breaking said ridges (24) into discrete teeth,
**characterised in that**
said set of second grooves (35) comprises oppositely oriented helical grooves extending from respective axial ends of the crop processing roll (22) toward an intermediate plane spaced from the axial ends of the crop processing roll, whereby the teeth defined by the intersecting first and second grooves (23,35) are oriented in a manner to urge the crop material engaged by said crop processing roll (22) toward said intermediate plane and thereby prevent crop from migrating toward either one of the axial ends of said crop processing roll (22).

2. The crop processing roll (22) as claimed in claim 1, wherein the shape of the lengthways (23) and helically (35) extending grooves has vertical sides and a rounded bottom portion.

3. The crop processing roll (22) of claim 1 or claim 2, wherein the discrete teeth formed by the intersection of the second grooves (35) with the ridges (24) formed by the first grooves (23) have different longitudinal lengths depending on the location of the respective teeth on the processing roll (22).

4. The crop processing roll (22) of any preceding claim, wherein the oppositely oriented second grooves (35) intersect at the intermediate plane of the cylindrical body to form a V-shaped chevron configuration.

5. The crop processing roll (22) of any one of claim 1 to claim 3, wherein the oppositely oriented second grooves (35) do not intersect, leaving a gap at the intermediate plane between the oppositely oriented helically extending grooves (35).

6. The crop processing roll (22) as claimed in any preceding claim, wherein the crop processing roll is designed for use in a forage harvester (10) to process corn kernels passing through said forage harvester (10) before being discharged from the forage harvester (10).

7. A crop processor comprising two crop processing rolls as claimed in any preceding claim mounted for rotation about parallel axes of rotation and having outer surfaces spaced from one another by a gap through which crop material comminuted by the operation of the forage harvester (10) passes, the crop processing rolls (22) being driven at differential speeds to enhance the processing of the crop material passing between the crop processing rolls (22).

## Patentansprüche

1. Erntegutverarbeitungswalze (22) zur Verwendung in einem Feldhäcksler (10) zum Aufbrechen von Maiskörnern in Erntegut, das durch den Betrieb des Feldhäckslers (10) zerkleinert wird, bevor es aus dem Feldhäcksler (10) ausgetragen wird, umfassend:
einen länglichen zylindrischen Körper, der für eine Drehung um eine Achse angepasst ist, wobei in der zylindrischen Außenfläche ein Satz erster Nuten (23) gebildet ist, die sich generell in Längsrichtung des zylindrischen Körpers erstrecken, wobei die ersten Nuten (23) Rippen (24) dazwischen bilden,
und einen Satz zweiter Nuten (35), die in der zylindrischen Außenfläche gebildet sind und sich in einer Richtung erstrecken, um die ersten Nuten (23) zu schneiden und durch die Rippen (24) zu verlaufen, wodurch die Rippen (24) in separate Zähne gebrochen werden,
**dadurch gekennzeichnet, dass**
der Satz zweiter Nuten (35) entgegengesetzt ausgerichtete spiralförmige Nuten umfasst, die sich von den jeweiligen axialen Enden der Erntegutverarbeitungswalze (22) zu einer Zwischenebene erstrecken, die von den axialen Enden der Erntegutverarbeitungswalze beabstandet ist, wodurch die durch die sich schneidenden ersten und zweiten Nuten (23,35) definierten Zähne so ausgerichtet sind, dass sie das von der Erntegutverarbeitungswalze (22) eingegriffene Erntegut in Richtung der Zwischenebene zwingen und dadurch verhindern, dass Erntegut zu einem der axialen Enden der Erntegutverarbeitungswalze (22) migriert.

2. Erntegutverarbeitungswalze (22) nach Anspruch 1, wobei die Form der sich in Längsrichtung (23) und spiralförmig (35) erstreckenden Nuten vertikale Seiten und einen abgerundeten Bodenabschnitt aufweist.

3. Erntegutverarbeitungswalze (22) nach Anspruch 1 oder Anspruch 2,
wobei die
separaten Zähne, die durch den Schnittpunkt der zweiten Nuten (35) mit den durch die ersten Nuten (23) gebildeten Rippen (24) gebildet werden, je nach Lage der jeweiligen Zähne auf der Verarbeitungswalze (22) unterschiedliche Längslängen aufweisen.

4. Erntegutverarbeitungswalze (22) nach einem der vorhergehenden Ansprüche, wobei sich die entgegengesetzt ausgerichteten zweiten Nuten (35) in der Zwischenebene des zylindrischen Körpers schneiden und eine V-förmige Chevron-Konfiguration bilden.

5. Erntegutverarbeitungswalze (22) nach einem der Ansprüche 1 bis 3, wobei die entgegengesetzt ausgerichteten zweiten Nuten (35) sich nicht überschneiden, sodass in der Zwischenebene zwischen den entgegengesetzt ausgerichteten sich spiralförmig erstreckenden Nuten (35) eine Lücke entsteht.

6. Erntegutverarbeitungswalze (22) nach einem der vorhergehenden Ansprüche, wobei die Erntegutverarbeitungswalze für eine Verwendung in einem Feldhäcksler (10) konstruiert ist, um Maiskörner zu verarbeiten, die durch den Feldhäcksler (10) verlaufen, bevor sie aus dem Feldhäcksler (10) ausgetragen werden.

7. Erntegutverarbeitungsmaschine, umfassend zwei Erntegutverarbeitungswalzen nach einem der vorhergehenden Ansprüche, die für eine Drehung um parallele Drehachsen montiert sind und Außenflächen aufweisen, die voneinander durch einen Spalt beabstandet sind, durch den das durch den Betrieb des Feldhäckslers (10) zerkleinerte Erntegut verläuft, wobei die Erntegutverarbeitungswalzen (22) mit unterschiedlichen Geschwindigkeiten angetrieben werden, um das Verarbeiten des zwischen den Erntegutverarbeitungswalzen (22) verlaufenden Ernteguts zu verbessern.

## Revendications

1. Rouleau de traitement de plantes (22) destiné à être utilisé dans une récolteuse-hacheuse (10) pour casser des grains de maïs dans un matériau de plantes broyé par le fonctionnement de la récolteuse-hacheuse (10) avant d'être déchargé de la récolteuse-hacheuse (10), comprenant :
un corps cylindrique allongé adapté pour tourner autour d'un axe, la surface externe cylindrique étant formée à l'intérieur d'un ensemble de premières rainures (23) s'étendant globalement dans le sens de la longueur du corps cylindrique, lesdites premières rainures (23) formant des nervures (24) entre elles,
et un ensemble de secondes rainures (35) formées dans la surface externe cylindrique et s'étendant dans une direction pour croiser lesdites premières rainures (23) et passer à travers lesdites nervures (24), brisant ainsi lesdites nervures (24) en dents distinctes,
**caractérisé en ce que**
ledit ensemble de secondes rainures (35) comprend des rainures hélicoïdales orientées de manière opposée s'étendant à partir des extrémités axiales respectives du rouleau de traitement de plantes (22) vers un plan intermédiaire espacé des extrémités axiales du rouleau de traitement de plantes, moyennant quoi les dents définies par les première et secondes rainures (23, 35) se croisant sont orientées de manière à pousser le matériau de plante en prise avec ledit rouleau de traitement de plantes (22) vers ledit plan intermédiaire et empêchant ainsi les plantes de migrer vers l'une ou l'autre des extrémités axiales dudit rouleau de traitement de plantes (22).

2. Rouleau de traitement de plantes (22) selon la revendication 1, ladite forme des rainures s'étendant dans le sens de la longueur (23) et en hélice (35) possédant des côtés verticaux et une partie inférieure arrondie.

3. Rouleau de traitement de plantes (22) selon la revendication 1 ou la revendication 2,
lesdites dents distinctes formées par l'intersection des secondes rainures (35) avec les nervures (24) formées par les premières rainures (23) possédant des longueurs longitudinales différentes en fonction de l'emplacement des dents respectives sur le rouleau de traitement (22).

4. Rouleau de traitement de plantes (22) selon une quelconque revendication précédente, lesdites secondes rainures (35) orientées de manière opposée se croisant au niveau du plan intermédiaire du corps cylindrique pour former une configuration de chevron en forme de V.

5. Rouleau de traitement de plantes (22) selon l'une quelconque de la revendication 1 à la revendication 3,
lesdites secondes rainures (35) orientées de manière opposée ne se croisant pas, laissant un espace au niveau du plan intermédiaire entre les rainures (35) s'étendant hélicoïdalement orientées de manière opposée.

6. Rouleau de traitement de plantes (22) selon une quelconque revendication précédente, ledit rouleau de traitement de plantes étant conçu pour être utilisé dans une récolteuse-hacheuse (10) pour traiter les grains de maïs passant à travers ladite récolteuse-hacheuse (10) avant d'être déchargé de la récolteuse-hacheuse (10).

7. Dispositif de traitement de plantes comprenant deux rouleaux de traitement de plantes selon une quelconque revendication précédente montée pour tourner autour d'axes de rotation parallèles et possédant des surfaces externes espacées l'une de l'autre par un espace à travers lequel passe le matériau de plantes broyé par le fonctionnement de la récolteuse-hacheuse (10), les rouleaux de traitement de plantes (22) étant entraînés à des vitesses différentes pour améliorer le traitement du matériau de plantes passant entre les rouleaux de traitement de plantes (22).
